# EUROPEAN PATENT SPECIFICATION

(11) **EP 3 192 409 B1**
(45) Date of publication and mention of the grant of the patent: **18.09.2019**
(21) Application number: 17150870.8
(22) Date of filing: 10.01.2017
(51) Int. Cl.: A47J 31/36

(54) **CAPSULE EXTRACTION MECHANISM**
KAPSELEXTRAKTIONSMECHANISMUS
MÉCANISME D'EXTRACTION DE CAPSULE

(30) Priority: 13.01.2016 CN 201610022591
(43) Date of publication of application: 19.07.2017
(73) Proprietor: NingBo LvZhiPin Electrical Appliance Science and Technology Co., Ltd, Ningbo City, Zhejiang Province 315400 (CN)
(72) Inventor: LU, Dingyao, Yuyao Ningbo City, Zhejiang Province, ZIP 315400 (CN); XU, Shuqing, Yuyao Ningbo City, Zhejiang Province, ZIP 315400 (CN); YUAN, Chao, Yuyao Ningbo City, Zhejiang Province, ZIP 315400 (CN)
(74) Representative: 2K Patentanwälte Blasberg Kewitz & Reichel

(56) References cited:
- EP-A1- 2 484 252
- EP-A1- 2 803 301
- WO-A1-2015/019250
- CN-B- 103 271 651
- CN-U- 201 987 325
- US-A1- 2013 180 410

## Description

### TECHNICAL FIELD

The present disclosure relates to a capsule extraction mechanism, and more particularly, to a capsule extraction mechanism which is applied to a capsule coffee machine.

### BACKGROUND

Coffee machine is an automatic equipment for realization of a whole process of milling, powder pressing, powdering, brewing, removal of residues, etc., of coffee. Capsule coffee machine is a kind of coffee machine, which makes an operation of extracting coffee more simply and conveniently. When operating the machine, the coffee material can be extracted with a single press on a button while the coffee capsule is put into a capsule cabin. It is more convenient compared with a semi-automatic coffee machine or an automatic coffee machine using coffee powder.

Wherein, the capsule extraction mechanism is an important part of the capsule coffee machine, and is used in a capsule coffee machine for pushing a coffee capsule which is placed in a capsule hydraulic tank to a capsule cover, and the cap of the coffee capsule is punctured with a thorn plate on the capsule pressure tank, and then hot water flew from a hot water pipe connected to the capsule hydraulic tank was used to brew the coffee powder in the coffee capsule. After the brewing finished, the coffee capsule is pulled out the capsule cover and released from the capsule extraction mechanism and dropped into the waste collecting tank for storage.

WO 2015/019250 A1 discloses a horizontal unit for making beverages using capsules containing powdered food substances. The unit comprises a first part and a second part which are mobile between an operating position in which they form an extraction chamber for a capsule, and a capsule insertion position in which they are distanced, and movement means for reciprocal movement of the two parts comprising a connecting rod
- crank mechanism connected to the mobile part. In the operating position the crank rests on a part of the unit supporting structure. The crank also comprises at least a first resting portion and/or a second resting portion which in the unit closed position act in contact respectively against at least a first should and/or a second shoulder formed by the supporting structure, said shoulders being positioned respectively in such a way as to prevent movements of the crank towards the shaft parallel with the axial line and/or movements of the crank transversally to the plane in which it rotates. EP 2 484 252 A1 discloses a machine for preparing beverages by infusion of capsules with a projecting edge; the machine is provided with an infusion unit comprising:
- a piston movable in the two directions between a first and a second position;
- a chamber with a seat for receiving a capsule; A profile follower element is rigid with the piston to cooperate with a corresponding profile rigid with the chamber, and shaped to move the chamber from its first to its second position, and vice versa, as a consequence of the movement of the piston from its first to its second position and vice versa.

The present disclosure provides a new capsule extraction mechanism to meet the requirement of the capsule coffee machine.

### SUMMARY

The object of the present invention, directed to the above problems, is to provide a capsule extraction mechanism.

A capsule extraction mechanism provided by the present disclosure comprises the features disclosed in claim 1.

Preferably, the capsule extraction mechanism further comprises two opposite side guide rails disposed on the capsule holder, wherein the side guide rail is fixed to the capsule holder and is partly inserted into the capsule holder, wherein a distance between two opposite faces of each side guide rail which is projecting into the capsule holder is gradually reduced along an axial direction of the capsule cover.

Preferably, the push plate bracket is provided with a dovetail guide rail on the side facing the capsule hydraulic tank, and the dovetail guide rail is arranged perpendicularly with respect to the push plate bracket.

Preferably, an opening width of an end of the groove of the push plate bracket which is adjacent to the protrusion is greater than that of the other end.

According to the invention, the capsule extraction mechanism comprises two pulling hooks.

According to the invention, the push plate bracket is provided with a notch, and an end of the pulling hook away from the capsule hydraulic tank is inserted into the notch and extended outwardly.

Preferably, the drive assembly comprises a rocker cover, a first drive lever, a spindle connection lever, a second drive lever, two hydraulic tank coupling rods and a third drive lever, the first drive lever, second drive lever, and the third drive lever are respectively positioned on the capsule holder, wherein the third drive lever is connected to the capsule hydraulic tank; two ends of the first drive lever are respectively sleeved with a shaft sleeve and positioned to the capsule holder thereby, and two terminal ends of the first drive lever extended out of the capsule holder are respectively fixed to the rocker cover, the part of the first drive lever disposed on the capsule holder is connected to the spindle connection lever; and an end of the spindle connection lever is connected to the second drive lever; the two hydraulic tank coupling rods are arranged opposite to each other, and the two ends thereof are respectively connected to the second drive lever and the third drive lever.

Preferably, the end surface of the spindle connection lever resisting to the first drive lever is arranged in a hexagonal shape matched thereto.

Preferably, two side walls of the capsule holder are symmetrically provided with two slide grooves, and the first, second, and third driving levers and the capsule hydraulic tank are respectively positioned on the slide groove of the capsule holder.

Preferably, the upper guide rail is fixed to the capsule holder through four screws provided on both sides thereof.

In summary, the capsule extraction mechanism provided by the present disclosure has simple structure and is convenient in operation, and is realized through the reasonable structure setting of the guide rail, the push plate bracket and the pulling hook, so as to hold, puncture and use the capsules inserted into the capsule insertion groove, and further pull the used capsule waste out from the capsules cap to release them, to meet the requirements of using the capsule coffee machine.

### BRIEF DESCRIPTION OF THE DRAWINGS

Fig.1 is an exploded view of a capsule extraction mechanism according to a preferred embodiment of the present disclosure.
Fig. 2 is a schematic structural view of a drive assembly of the present disclosure.
Fig. 3 is a schematic structural view of an upper guide rail on a holder according to the present disclosure;
Fig. 4 is a schematic structural view of a push plate bracket according to the present disclosure.
Fig. 5 is a schematic structural view of a pulling hook according to the present disclosure.
Fig. 6 is a top view of the capsule extraction mechanism of Fig. 1 (showing an initial state of the push plate bracket) provided in the preferred embodiment of the present disclosure.
Fig. 7 is a top view of the capsule extraction mechanism of Fig. 1 (showing the state of positioning the push plate bracket at the end) provided in the preferred embodiment of the present disclosure.
Fig. 8 is a partially exploded view of the capsule extraction mechanism according to a preferred embodiment of the present disclosure.
Fig. 9 is a schematic view showing a state of putting a coffee capsule into the capsule extraction mechanism according to a preferred embodiment of the present disclosure.
Fig. 10 is a schematic view showing a state of pulling out a capsule with a pulling hook of the capsule extraction mechanism, according to the preferred embodiment of the present disclosure.
Fig. 11 is a schematic view showing a state of releasing a capsule of the capsule extraction mechanism according to a preferred embodiment of the present disclosure.

### DETAILED DESCRIPTION

Next, a detailed explanation will be given for exemplary embodiments with reference to the drawings. In the following description of the drawings, a same or like reference sign is given to a same or like part. The drawings schematically represent configurations according to the exemplary embodiments of the present invention. Furthermore, the exemplary embodiments of the present invention described below are examples and may be modified as appropriate as long as the nature of the present invention is not altered.

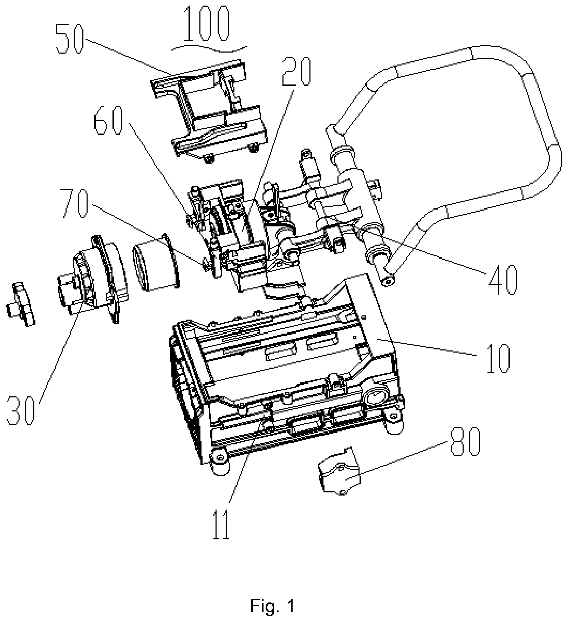

Referring to Fig. 1, a capsule extraction mechanism 100 according to a preferred embodiment of the present disclosure includes a capsule holder 10, a capsule hydraulic tank 20 provided on the capsule holder 10, a capsule cover 30, a drive assembly 40, an upper guide rail 50 of the holder 10, two oppositely disposed push plate brackets 60 and at least one pulling hook 70. In the present embodiment, the capsule extraction mechanism 100 is specifically used in a capsule coffee machine to hold, puncture and brew the coffee capsule, and the waste material after being used is pulled out from the capsule cover 30 and released. It is understood that in a process of using the capsule extraction mechanism 100 of the present embodiment, the coffee capsule used by the capsule extraction mechanism 100 can be replaced with other powdered materials, such as corn flour, soy milk powder or other beverage brewing powder.

The capsule holder 10 is a main body frame structure of the capsule extraction mechanism 100, and applying the capsule extraction mechanism 100 to the coffee capsule machine can be accomplished by assembling the capsule holder 10. The capsule holder 10 of the present embodiment has two slide grooves 11 symmetrically provided on both side walls thereof, and the capsule hydraulic tank 20 and the drive assembly 40 for driving the capsule hydraulic tank 20 are respectively positioned to the slide grooves 11, to ensure that the drive assembly 40 drives the capsule hydraulic tank 20 to reciprocate back and forth relative to the capsule cover 30.

The capsule hydraulic tank 20 is an important constituent part of the capsule extraction mechanism 100. The capsule hydraulic tank 20 is provided with a water pipe connector (not shown) for connecting to a hot water pipe (not shown) and a stinger board (not shown) for puncturing the capsule cover according to the usage requirements of the capsule extraction mechanism 100. Of course, a sealing ring (not shown) is provided on the periphery of the stinger board of the capsule hydraulic tank 20 in the present embodiment, so that the capsule extraction mechanism 100 can seals the liquid formed by mixturing the hot water from the water pipe with the capsule between the capsule hydraulic tank 20 and the capsule top 30. It will be understood that when the capsule hydraulic tank 20 of this embodiment is assembled to the capsule holder 10, the capsule hydraulic tank 20 is facing the capsule cover 30. And both ends of the capsule hydraulic tank 20 are respectively provided with sliding pads (not shown), and when the capsule hydraulic tank 20 is assembled to the capsule holder 10, the slide pad is fit in the slide grooves 11 of the capsule holder 10, to ensure that the capsule hydraulic tank 20 reciprocates linearly with respect to the capsule top 30.

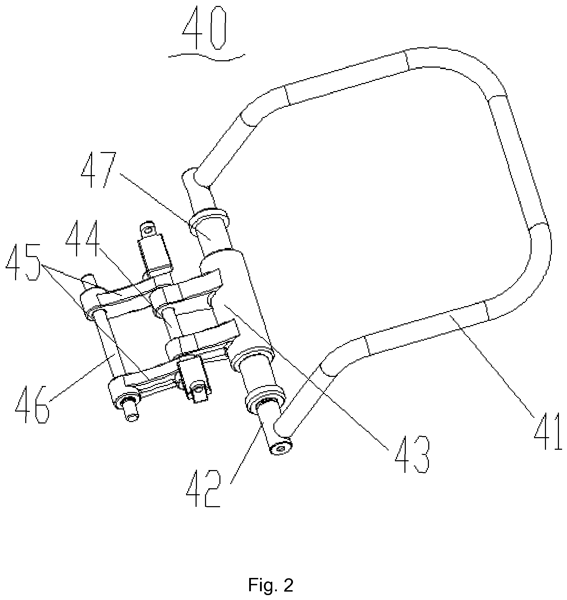

As shown in Fig. 2, the drive assembly 40 is applied in the capsule extraction mechanism 100 as a power source for urging the capsule hydraulic tank 20 to reciprocate relative to the capsule cover 30. Specifically, the drive assembly 40 includes a rocker cover 41, a first drive lever 42, a spindle connection lever 43, a second drive lever 44, two hydraulic tank coupling rods 45 and a third drive lever 46. The first drive lever 42, second drive lever 44, and the third drive lever 46 are respectively positioned on the capsule holder 10. Wherein, the third drive lever 46 is connected to the capsule hydraulic tank 20. In particular, two ends of the first drive lever 42, the second drive lever 44, and the third drive lever 46 are respectively received in the slide grooves 11 of the capsule holder 10, so that the directivity of the drive assembly 40 to the capsule hydraulic tank 20 is ensured.

Two shaft sleeves are sleeved on the first drive lever 42 and positioned on both sides of the spindle connection lever 43, and is restricted to the slide grooves 11 of the capsule holder 10 thereby. Wherein, two terminal ends of the first drive lever 42 extended out of the capsule holder 10 are respectively fixed to the rocker cover 41, the part of the first drive lever 42 disposed on the capsule holder 10 is connected to the spindle connection lever 43. In the present embodiment, the distal ends surface of the spindle connection lever 43 and the first driving lever 42 resisted against each other are arranged to be matched with hexagonal shape. The other end of the spindle connection lever 43 is connected to the second drive lever 44. The two hydraulic tank coupling rods 45 are disposed opposite to each other, with two ends thereof in connection of the second driving lever 44 and the third drive lever 46, respectively. As such, when the drive assembly 40 is operated, the spindle connection lever 43 is driven to rotate with the first drive lever 42, by the abutting engagement of the intersecting surfaces of the first driving lever 42 and the spindle connection lever 43 with pressing the rocker cover 41. By utilizing the structural features of the spindle connection lever 43 and the hydraulic tank coupling rod 45, the drive to the capsule hydraulic tank 20 is achieved. Similarly, the capsule hydraulic tank 20 can be reset to the initial state driven by lifting the rocker cover 41.

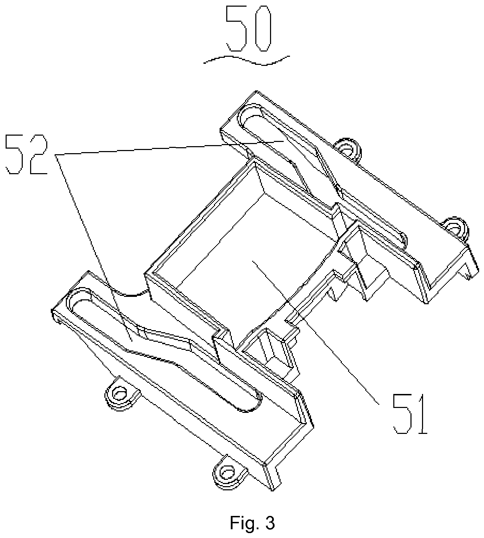

Referring to Fig. 3, the upper guide rail 50 of the holder 10 is assembled into the capsule extraction mechanism 100 for controlling the movement of the push plate bracket 60 in the transverse direction. Particularly, the upper guide rail 50 is fixed to the top of the capsule holder 10, with a capsule insertion groove 51 and two symmetrical guide grooves 52, wherein each guide groove 52 comprises a bent portion bent outward with respect to the capsule insertion groove 51. In the present embodiment, the upper guide rail 50 is fixedly connected to the capsule holder 10 through four screws (not shown) provided on both sides of the upper guide rail 50 of the holder 10.

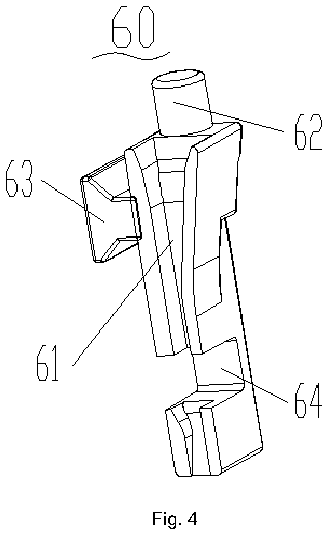

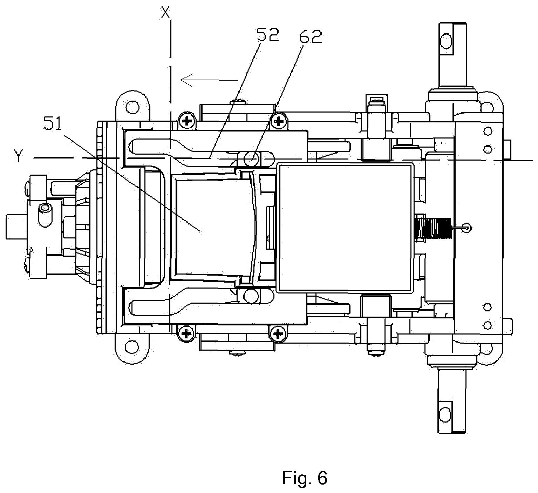

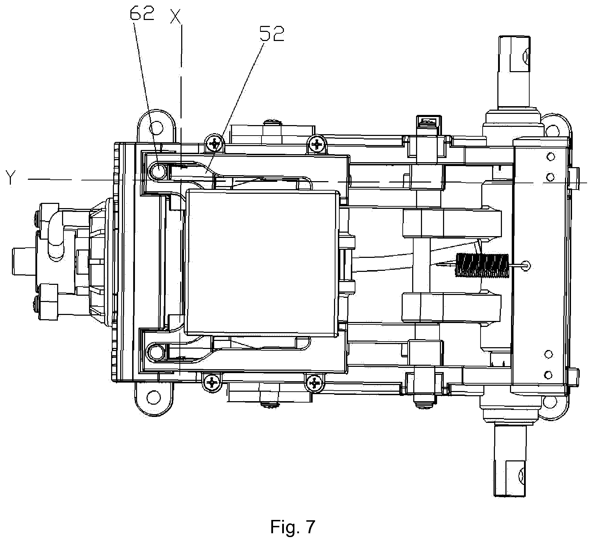

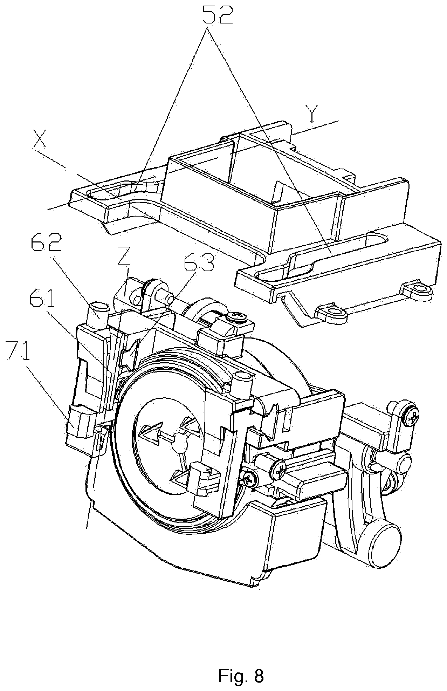

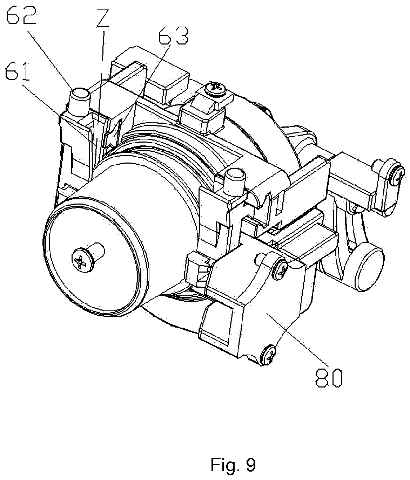

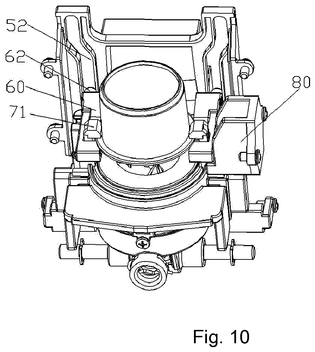

Referring to Figs. 4, 6, 7, 8, 9, and 10, the push plate bracket 60 applied to the capsule extraction mechanism 100 is configured to hold or release the capsule inserted from the capsule insertion groove 51 of the upper guide rail 50. In the present embodiment, the capsule extraction mechanism 100 includes two oppositely disposed push plate brackets 60 respectively provided with a groove 61 on the opposing faces thereof (along an axial direction) for holding the capsule. And the operation of holding and releasing the capsules is realized by changing the distance between the chucking grooves 61 disposed on the two push plate brackets 60. Wherein, the side of each of the push plate brackets 60 facing the capsule hydraulic tank 20 cooperates with the capsule hydraulic tank 20 with a dovetail groove, and the side facing the upper guide rail 50 includes a protrusion 62 projecting into the upper stop groove 52 of the upper guide rail 50 of the holder 10. In the present embodiment, the push plate bracket 60 is provided with a dovetail guide rail 63 on the side facing the capsule hydraulic tank 20, and the guide rail 63 is disposed laterally perpendicularly to the push plate bracket 60, and accordingly, the capsule hydraulic tank 20 is provided with a dovetail groove matching the guide rail 63 on the push plate bracket 60. It will be understood that by the structural arrangement between the push plate bracket 60 and the capsule hydraulic tank 20, the push plate bracket 60 can be moved (in the direction of the axis Y) back and forth along with the capsule hydraulic tank 20 in the direction of the capsule cover 30, as well as being movable in the transverse direction (the direction of the axis X) of the capsule hydraulic tank 20. Further, the opening width of the groove 61 adjacent to one end of the protrusion 62 is larger than that of the other end.

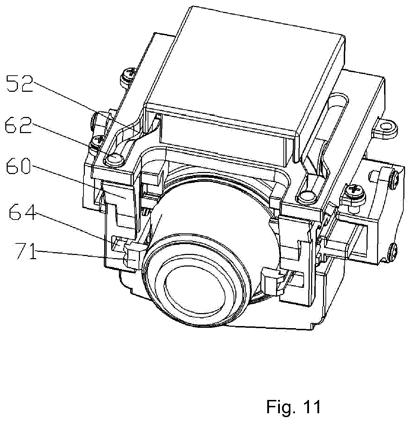

When the push plate bracket 60 is assembled to the capsule extraction mechanism 100, since the protrusion 62 of the push plate bracket 60 is positioned in the guide groove 52 of the upper guide rail 50 of the holder, driven by the drive assembly 40, the projection 62 of the push plate bracket 60 is moved by the restriction of the guide groove 52 on the upper guide rail 50 during the movement of the capsule hydraulic tank 20 toward the capsule cover 30. When the protrusion 62 moves to the bent portion (as shown in Fig. 11) of the guide rail 52 of the upper guide rail 50 with the push plate bracket 60, the push plate bracket 60 is driven outwardly with respect to the capsule hydraulic tank 20 by the biasing action of the bent portion. That is, i.e., under the action of the upper guide rail 50, the push plate bracket 60 is driven to move outwardly relative to the tank 20 in a transverse direction, and accordingly, the two chucking grooves 61 on the two push plate brackets 60 for holding the capsule are opened and continue until the gap between the grooves of the two push plate bracket 60 is greater than an outer diameter of the capsules gap. That is, the push plate bracket 60 achieves the dispensing of the capsules.

It will be understood that when the drive assembly 40 drives the capsule assembly 20 to move relative to the capsule cover 30, the capsule is partly inserted into the capsule cover 30, and then the push plate bracket 60 performs the releasing operation to the capsule under the restriction guidance of the guide groove 52 of the upper guide rail 50. On the contrary, when the drive assembly 40 drives the capsule hydraulic tank 20 for resetting, because the distance between the chucking grooves 61 on the push plate bracket 60 is greater than the outer diameter of the capsule cover 30, the push plate bracket 60 loses the chucking action to the capsule during pulling out the used capsule waste from the capsule cover 30 with the pulling hook 70. Thus, the capsule extraction mechanism 100 can release/remove the capsule waste.

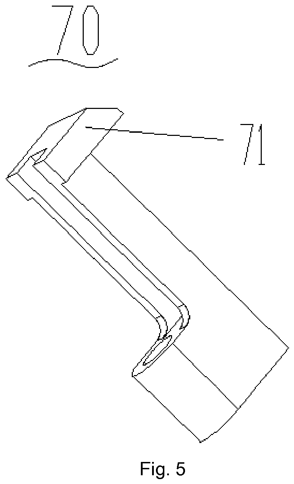

Referring to Fig. 5, the pulling hook 70 applied in the capsule extraction mechanism 100 is configured to pull the used capsule waste out of the capsule cover 30, to remove the capsule waste while using the capsule extraction mechanism 100. The capsule extraction mechanism 100 of the present embodiment specifically includes two opposite pulling hooks 70 which are vertically fixed to the capsule hydraulic tank 20 and extend outwardly with respect to the push plate bracket 60. A bent hook 71 is provided at one end of the pulling hook 70 away from the capsule hydraulic tank 20. Further, the bent hook 71 in the pulling hook 70 is in interference fit with respect to the capsule cover 30. That is, when the pulling hook 70 is attached to the capsule hydraulic tank 20, the end portion of the bent hook 71 of the pulling hook 70 partially coincides with the capsule cover 30, thus ensuring the pulling hook 70 pulls the capsule waste out of the capsule cover 30 while the capsule extraction mechanism 100 is in use.

It will be understood that the push plate bracket 60 of the present embodiment is provided with a notch 64 in order to satisfy the specific assembly of the pulling hook 70 and the push plate bracket 60 in the capsule extraction mechanism 100, and an end of the pulling hook 70 away from the capsule hydraulic tank 20 projects into the notch 64 and extends outwardly.

As a preferred embodiment of the present disclosure, the capsule extraction mechanism 100 of the present embodiment further comprises two oppositely disposed side guide rails 80 disposed on the capsule holder 10, which are fixed to the capsule holder 10 and partially protrude relative to the capsule holder 10. And the distance between two opposing faces of each side guide rail 80 projected into the capsule holder 10 (see Fig. 1) is gradually reduced along an axial direction of the capsule cover 30. It is to be understood that the side guide rail 80 applied in the capsule extraction mechanism 100 is specifically assembled in the slide grooves 11 of the capsule holder 10, and at a position where the capsule hydraulic tank 20 is in an initial state. As such, during the resetting of the push plate bracket 60 to the initial state along with the capsule hydraulic tank 20, the side guide rail 80 positioned on capsule holder 10 would resist against the push plate bracket 60. Thus, when the push plate bracket 60 is reset to the initial state, an offset of the push plate bracket 60 to the capsule hydraulic tank 20, which is caused by a processing error existed during the manufactured process of the notch 64 in the push plate bracket 60 and the pulling hook 70 and a gap between the guide rail 63 of the push plate bracket 60 and the corresponding dovetail groove on the capsule hydraulic tank 20, is avoided. Thereby, the capsules to be inserted can be re-engaged when the capsule extraction mechanism 100 is operated in the next cycle.

In summary, the present disclosure provides a capsule extraction mechanism comprising a capsule holder and a capsule hydraulic tank, a capsule cover and a drive assembly, an upper guide rail, two opposite push plate brackets, and at least one pulling hook. Wherein, the upper guide rail is fixed on the top of the capsule holder with a capsule insertion groove and two symmetrical guide grooves, wherein each guide groove comprises a bent portion bent outward with respect to the capsule insertion groove; the two opposite push plate brackets are respectively provided with a chucking groove on the opposing faces thereof for holding the capsule, wherein one side surface of each push plate bracket facing the capsule hydraulic tank is provided with a dovetail groove matching to the capsule hydraulic tank, and another side surface facing the upper guide rail is provided with a protrusion protruding outwardly and projecting into the guide groove of the upper guide rail; and the at least one pulling hook is vertically fixed to the capsule hydraulic tank and projecting outwardly with respect to the push plate bracket, wherein the pulling hook is provided with a bent hook at one end away from the capsule hydraulic tank. The present invention can meet the requirements of using the capsule coffee machine.

In conclusion, the capsule extraction mechanism provided by the present disclosure has simple structure and is convenient in operation, and is realized through the reasonable structure setting of the guide rail, the push plate bracket and the pulling hook, so as to hold, puncture and use the capsules inserted into the capsule insertion groove, and further pull the used capsule waste out from the capsules cap to release them, to meet the requirements of using the capsule coffee machine.

Although certain inventive embodiments of the present disclosure have been specifically described, the present disclosure is not to be construed as being limited thereto. Various changes or modifications may be made to the present disclosure beyond departing from the scope of the appended claims.

## Claims

1. A capsule extraction mechanism (100) comprising a capsule holder (10) and a capsule hydraulic tank (20), a capsule cover (30) and a drive assembly (40) disposed on the capsule holder (10), wherein the drive assembly (40) is configured to drive the capsule hydraulic tank (20) to reciprocate back and forth relative to the capsule cover (30); wherein the capsule extraction mechanism further comprises:
an upper guide rail (50) fixed on the top of the capsule holder (10) with a capsule insertion groove (51) and two symmetrical guide grooves (52), wherein each guide groove (52) comprises a bent portion bent outward with respect to the capsule insertion groove (51);
two opposite push plate brackets (60) respectively provided with a chucking groove (61) on the opposing faces thereof for holding a capsule, wherein one side surface of each push plate bracket (60) facing the capsule hydraulic tank (20) is provided with a dovetail groove matching to the capsule hydraulic tank (20), and another side surface facing the upper guide rail (50) is provided with a protrusion (62) protruding outwardly and projecting into the guide groove (52) of the upper guide rail (50); **characterized by**
two pulling hooks (70) vertically fixed to the capsule hydraulic tank (20) and projecting outwardly with respect to the push plate bracket (60), wherein the pulling hooks (70) are configured to pull the used capsule waste out of the capsule cover, to remove the capsule waste while using the capsule extraction mechanism, each pulling hook (70) is provided with a bent hook (71) at one end away from the capsule hydraulic tank (20), and the bent hook (71) is in interference fit with respect to the capsule cover (30), and each push plate bracket (60) is provided with a notch (64), and an end of each pulling hook (70) away from the capsule hydraulic tank (20) is inserted into the notch (64) and extended outwardly.

2. The capsule extraction mechanism according to claim 1, wherein the capsule extraction mechanism further comprises two opposite side guide rails (80) disposed on the capsule holder (10), wherein the side guide rail (80) is fixed to the capsule holder (10) and is partly inserted into the capsule holder (10), wherein a distance between two opposite faces of each side guide rail (80) which is projecting into the capsule holder (10) is gradually reduced along an axial direction of the capsule cover (30).

3. The capsule extraction mechanism according to claim 1 or 2, wherein the push plate bracket (60) is provided with a dovetail guide rail (63) on the side facing the capsule hydraulic tank (20), and the dovetail guide rail (63) is arranged perpendicularly with respect to the push plate bracket (60).

4. The capsule extraction mechanism according to one of the preceding claims, wherein an opening width of an end of the chucking groove (61) of the push plate bracket (60) which is adjacent to the protrusion (62) is greater than that of the other end.

5. The capsule extraction mechanism of one of the preceding claims, wherein the drive assembly (40) comprises a rocker cover (41), a first drive lever (42), a spindle connection lever (43), a second drive lever (44), two hydraulic tank coupling rods (45) and a third drive lever (46), the first drive lever (42), second drive lever (44), and the third drive lever (46) are respectively positioned on the capsule holder (10), wherein the third drive lever (46) is connected to the capsule hydraulic tank (20); two ends of the first drive lever (42) are respectively sleeved with a shaft sleeve and positioned to the capsule holder (10) thereby, and two terminal ends of the first drive lever (42) extended out of the capsule holder (10) are respectively fixed to the rocker cover (41), the part of the first drive lever (42) disposed on the capsule holder (10) is connected to the spindle connection lever (43); and an end of the spindle connection lever (43) is connected to the second drive lever (42); the two hydraulic tank coupling rods (45) are arranged opposite to each other, and the two ends thereof are respectively connected to the second drive lever (44) and the third drive lever (46).

6. The capsule extraction mechanism according to claim 5, wherein the end surface of the spindle connection lever (43) resisting to the first drive lever (42) is arranged in a hexagonal shape matched thereto.

7. The capsule extraction mechanism according to claim 6, wherein two side walls of the capsule holder (10) are symmetrically provided with two slide grooves (11), and the first drive lever (42), the second drive lever (44), the third drive lever (46) and the capsule hydraulic tank (20) are respectively positioned on the slide groove (11) of the capsule holder (10).

8. The capsule extraction mechanism according to one of the preceding claims, wherein the upper guide rail (50) is fixed to the capsule holder (10) through four screws provided on both sides thereof.

## Patentansprüche

1. Kapsel-Extraktionsmechanismus (100), umfassend einen Kapselhalter (10) und einen Kapsel-Hydrauliktank (20), eine Kapselabdeckung (30) und eine Antriebsanordnung (40), die auf dem Kapselhalter (10) angeordnet ist, wobei die Antriebsanordnung (40) konfiguriert ist, um den Kapsel-Hydrauliktank (20) anzutreiben, um sich in Bezug auf die Kapselabdeckung (30) hin und her zu bewegen; wobei der Kapsel-Extraktionsmechanismus ferner umfasst:
eine obere Führungsschiene (50), die auf der Oberseite des Kapselhalters (10) mit einer Kapsel-Einführnut (51) und zwei symmetrischen Führungsnuten (52) befestigt ist, wobei jede Führungsnut (52) einen nach außen gebogenen Abschnitt in Bezug auf die Kapsel-Einführnut (51) aufweist;
zwei gegenüberliegende Druckplattenhalterungen (60), die jeweils mit einer Spannnut (61) auf ihren gegenüberliegenden Seiten zum Halten einer Kapsel versehen sind, wobei eine Seitenfläche jeder Druckplattenhalterung (60), die dem Kapsel-Hydrauliktank (20) zugewandt ist, mit einer Schwalbenschwanznut versehen ist, die zu dem Kapsel-Hydrauliktank (20) passt, und eine weitere Seitenfläche, die der oberen Führungsschiene (50) zugewandt ist, mit einem Vorsprung (62) versehen ist, der nach außen vorsteht und in die Führungsnut (52) der oberen Führungsschiene (50) ragt; **gekennzeichnet durch**
zwei Zughaken (70), die vertikal an dem Kapsel-Hydrauliktank (20) befestigt sind und in Bezug auf die Druckplattenhalterung (60) nach außen ragen, wobei die Zughaken (70) konfiguriert sind, um den verbrauchten Kapselabfall aus der Kapselabdeckung herauszuziehen, um den Kapselabfall unter Verwendung des Kapsel-Extraktionsmechanismus zu entfernen, wobei jeder Zughaken (70) mit einem gebogenen Haken (71) an einem Ende weg vom Kapsel-Hydrauliktank (20) versehen ist, und der gebogene Haken (71) sich in Presspassung in Bezug auf die Kapselabdeckung (30) befindet, und jede Druckplattenhalterung (60) mit einer Kerbe (64) versehen ist, und ein Ende jedes Zughakens (70) weg von dem Kapsel-Hydrauliktank (20) in die Kerbe (64) eingeführt und nach außen verlängert ist.

2. Kapsel-Extraktionsmechanismus nach Anspruch 1, wobei der Kapsel-Extraktionsmechanismus ferner zwei gegenüberliegende Seitenführungsschienen (80) aufweist, die auf dem Kapselhalter (10) angeordnet sind, wobei die Seitenführungsschiene (80) an dem Kapselhalter (10) befestigt und teilweise in den Kapselhalter (10) eingesetzt ist, wobei ein Abstand zwischen zwei gegenüberliegenden Flächen jeder Seitenführungsschiene (80), die in den Kapselhalter (10) ragt, schrittweise entlang einer axialen Richtung der Kapselabdeckung (30) reduziert ist.

3. Kapsel-Extraktionsmechanismus nach Anspruch 1 oder 2, wobei die Druckplattenhalterung (60) mit einer Schwalbenschwanzführungsschiene (63) auf der dem Kapsel-Hydrauliktank (20) zugewandten Seite versehen ist, und wobei die Schwalbenschwanzführungsschiene (63) senkrecht zu der Druckplattenhalterung (60) angeordnet ist.

4. Kapsel-Extraktionsmechanismus nach einem der vorhergehenden Ansprüche, wobei eine Öffnungsweite eines Endes der Spannnut (61) der Druckplattenhalterung (60), die dem Vorsprung (62) benachbart ist, größer ist als die von dem anderen Ende.

5. Kapsel-Extraktionsmechanismus nach einem der vorhergehenden Ansprüche, wobei die Antriebsanordnung (40) umfasst: eine Kipphebelabdeckung (41), einen ersten Antriebshebel (42), einen Spindelverbindungshebel (43), einen zweiten Antriebshebel (44), zwei Hydrauliktank-Koppelstangen (45) und einen dritten Antriebshebel (46), wobei der erste Antriebshebel (42), der zweite Antriebshebel (44), und der dritte Antriebshebel (46) jeweils auf dem Kapselhalter (10) angeordnet sind, wobei der dritte Antriebshebel (46) mit dem Kapsel-Hydrauliktank (20) verbunden ist; wobei zwei Enden des ersten Antriebshebels (42) jeweils mit einer Wellenhülse versehen und dadurch an dem Kapselhalter (10) positioniert sind, und zwei endständige Enden des ersten Antriebshebels (42), der aus dem Kapselhalter (10) herausragt, jeweils an der Kipphebelabdeckung (41) befestigt sind, wobei der Teil des ersten Antriebshebels (42), der auf dem Kapselhalter (10) angeordnet ist, mit dem Spindelverbindungshebel (43) verbunden ist; und ein Ende des Spindelverbindungshebels (43) mit dem zweiten Antriebshebel (42) verbunden ist; wobei die beiden hydraulischen Hydrauliktank-Koppelstangen (45) gegenüberliegend angeordnet sind, und die beiden Enden davon jeweils mit dem zweiten Antriebshebel (44) und dem dritten Antriebshebel (46) verbunden sind.

6. Kapsel-Extraktionsmechanismus nach Anspruch 5, wobei die Endfläche des Spindelverbindungshebels (43), der dem ersten Antriebshebel (42) widersteht, in einer daran angepassten sechseckigen Form angeordnet ist.

7. Kapsel-Extraktionsmechanismus nach Anspruch 6, wobei zwei Seitenwände des Kapselhalters (10) symmetrisch mit zwei Gleitnuten (11) versehen sind, und der erste Antriebshebel (42), der zweite Antriebshebel (44), der dritte Antriebshebel (46) und der Kapsel-Hydrauliktank (20) jeweils auf der Gleitnut (11) des Kapselhalters (10) angeordnet sind.

8. Kapsel-Extraktionsmechanismus nach einem der vorhergehenden Ansprüche, wobei die obere Führungsschiene (50) an dem Kapselhalter (10) durch vier Schrauben, die auf beiden Seiten davon vorgesehen sind, befestigt ist.

## Revendications

1. Mécanisme d'extraction de capsule (100) comprenant un support de capsule (10) et un réservoir hydraulique à capsule (20), un couvercle de capsule (30) et un ensemble d'entraînement (40) disposé sur le support de capsule (10), l'ensemble d'entraînement (40) étant configuré pour entraîner le réservoir hydraulique à capsule (20) en va-et-vient par rapport au couvercle de capsule (30) ; le mécanisme d'extraction de capsule comprenant en outre :
un rail de guidage supérieur (50) fixé sur la partie supérieure du support de capsule (10) avec une rainure d'introduction de capsule (51) et deux rainures de guidage symétriques (52), chaque rainure de guidage (52) comprenant une partie coudée, qui est coudée vers l'extérieur par rapport à la rainure d'introduction de capsule (51) ;
deux supports à plaque de poussée opposés (60) comportant respectivement une rainure de retenue (61) sur les faces opposées de ceux-ci pour maintenir une capsule, une surface latérale de chaque support à plaque de poussée (60), faisant face au réservoir hydraulique à capsule (20), comportant une rainure en queue d'aronde correspondant au réservoir hydraulique à capsule (20), et une autre surface latérale faisant face au rail de guidage supérieur (50) comportant une saillie (62) faisant saillie vers l'extérieur et se projetant dans la rainure de guidage (52) du rail de guidage supérieur (50) ; **caractérisé par**
deux crochets de traction (70) fixés verticalement au réservoir hydraulique à capsule (20) et se projetant vers l'extérieur par rapport au support à plaque de poussée (60), les crochets de traction (70) étant configurés pour tirer les déchets de capsule usagée hors du couvercle de capsule, afin de retirer les déchets de capsule tout en utilisant le mécanisme d'extraction de capsule, chaque crochet de traction (70) comportant un crochet coudé (71) à une extrémité à distance du réservoir hydraulique à capsule (20), et le crochet coudé (71) étant en ajustement serré par rapport au couvercle de capsule (30), et chaque support à plaque de poussée (60) comportant une encoche (64), et une extrémité de chaque crochet de traction (70) à distance du réservoir hydraulique à capsule (20) étant introduite dans l'encoche (64) et s'étendant vers l'extérieur.

2. Mécanisme d'extraction de capsule selon la revendication 1, le mécanisme d'extraction de capsule comprenant en outre deux rails de guidage latéraux opposés (80) disposés sur le support de capsule (10), le rail de guidage latéral (80) étant fixé au support de capsule (10) et étant partiellement introduit dans le support de capsule (10), une distance entre deux faces opposées de chaque rail de guidage latéral (80) qui se projette dans le support de capsule (10) étant progressivement réduite le long d'une direction axiale du couvercle de capsule (30).

3. Mécanisme d'extraction de capsule selon la revendication 1 ou 2, dans lequel le support à plaque de poussée (60) comporte un rail de guidage en queue d'aronde (63) sur le côté faisant face au réservoir hydraulique à capsule (20), et le rail de guidage en queue d'aronde (63) est disposé perpendiculairement au support à plaque de poussée (60).

4. Mécanisme d'extraction de capsule selon l'une des revendications précédentes, dans lequel une largeur d'ouverture d'une extrémité de la rainure de retenue (61) du support à plaque de poussée (60) qui est adjacente à la saillie (62) est supérieure à celle de l'autre extrémité.

5. Mécanisme d'extraction de capsule selon l'une des revendications précédentes, dans lequel l'ensemble d'entraînement (40) comprend un couvercle de basculement (41), un premier levier d'entraînement (42), un levier de liaison à broche (43), un deuxième levier d'entraînement (44), deux tiges de couplage de réservoir hydraulique (45) et un troisième levier d'entraînement (46), le premier levier d'entraînement (42), le deuxième levier d'entraînement (44) et le troisième levier d'entraînement (46) sont respectivement positionnés sur le support de capsule (10), le troisième levier d'entraînement (46) étant relié au réservoir hydraulique à capsule (20) ; deux extrémités du premier levier d'entraînement (42) sont respectivement emmanchées par un manchon d'arbre et positionnées sur le support de capsule (10) par celui-ci, et deux extrémités terminales du premier levier d'entraînement (42) s'étendant hors du support de capsule (10) sont respectivement fixées au couvercle de basculement (41), la partie du premier levier d'entraînement (42) disposée sur le support de capsule (10) est reliée au levier de liaison à broche (43) ; et une extrémité du levier de liaison à broche (43) est reliée au deuxième levier d'entraînement (42) ; les deux tiges de couplage de réservoir hydraulique (45) sont disposées l'une à l'opposé de l'autre, et les deux extrémités de celles-ci sont respectivement reliées au deuxième levier d'entraînement (44) et au troisième levier d'entraînement (46).

6. Mécanisme d'extraction de capsule selon la revendication 5, dans lequel la surface d'extrémité du levier de liaison à broche (43) résistant au premier levier d'entraînement (42) est disposée suivant une forme hexagonale mise en correspondance avec celui-ci.

7. Mécanisme d'extraction de capsule selon la revendication 6, dans lequel deux parois latérales du support de capsule (10) comportent, de manière symétrique, deux rainures de coulissement (11), et le premier levier d'entraînement (42), le deuxième levier d'entraînement (44), le troisième levier d'entraînement (46) et le réservoir hydraulique à capsule (20) sont respectivement positionnés sur la rainure de coulissement (11) du support de capsule (10).

8. Mécanisme d'extraction de capsule selon l'une des revendications précédentes, dans lequel le rail de guidage supérieur (50) est fixé au support de capsule (10) par l'intermédiaire de quatre vis prévues sur les deux côtés de celui-ci.
